# EUROPEAN PATENT SPECIFICATION

(11) **EP 3 280 984 B1**
(45) Date of publication and mention of the grant of the patent: **19.12.2018**
(21) Application number: 16731355.0
(22) Date of filing: 24.03.2016
(51) Int. Cl.: G01G 19/12, A01F 15/08

(54) **AGRICULTURAL COMBINATION WITH A SCALE AND A WEIGHT FORCE MEASURING METHOD**
LANDWIRTSCHAFTLICHE KOMBINATION MIT EINER WAAGE UND EINEM GEWICHTSKRAFTMESSVERFAHREN
COMBINAISON AGRICOLE AVEC UNE BALANCE ET UN PROCÉDÉ DE MESURE DE FORCE DE POIDS

(30) Priority: 08.04.2015 NL 2014595
(43) Date of publication of application: 14.02.2018
(73) Proprietor: Forage Company B.V., 3147 PB Maassluis (NL)
(72) Inventor: SCHLICHTING, Malte Cornelius, 3147 PB Maassluis (NL)
(74) Representative: AGCO Intellectual Property Department
(86) International application number: PCT/NL2016/050203
(87) International publication number: WO 2016/163874

(56) References cited:
- EP-A1- 1 029 440
- EP-A1- 2 446 731
- US-A- 5 811 738
- US-A- 5 814 771

## Description

### FIELD OF THE INVENTION

The invention refers to a combination comprising a propelled vehicle, an agricultural implement, and a scale for measuring a weight force occurring on board of the implement. The invention further refers to a weight force measuring method by using such a combination. The invention can in particular be used on board of a combination in which the implement forms a round-cylindrical or cuboid bale from loose material, e.g. from agricultural crop material, or processes and stores agricultural material in a chamber on board of the implement and wherein the weight of the pressed or stored loose material is to be measured.

### BACKGROUND OF THE INVENTION

In particular for controlling the combination while the combination is moved over ground it is desired to measure the vertical load applied by the implement onto a pulling vehicle while the implement carries an object. The weight is often not known. The vertical load often depends on that weight of an object carried on board of the implement. This vertical load often further depends on varying operating conditions. Several proposals were made how to measure a weight or a further vertical load in the context of agricultural vehicles.

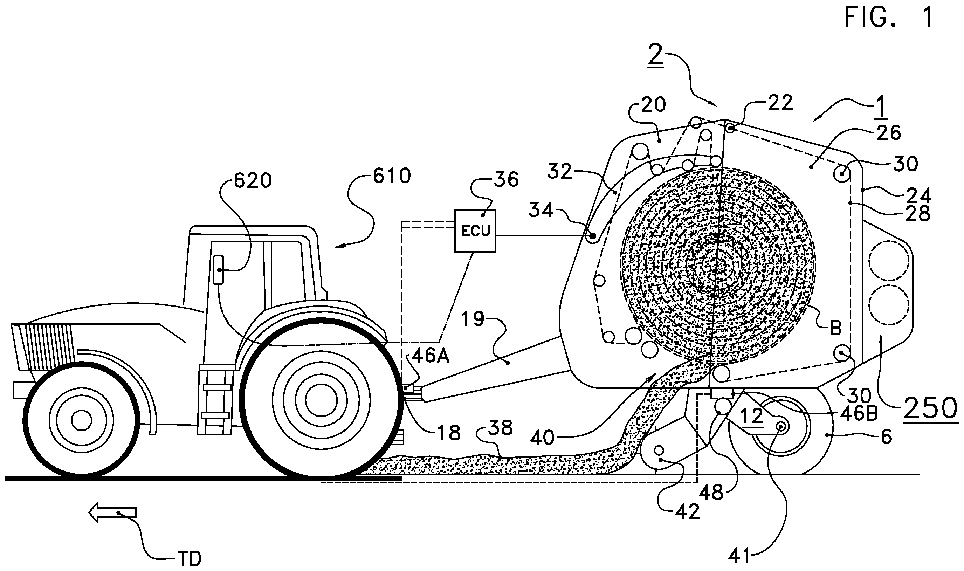

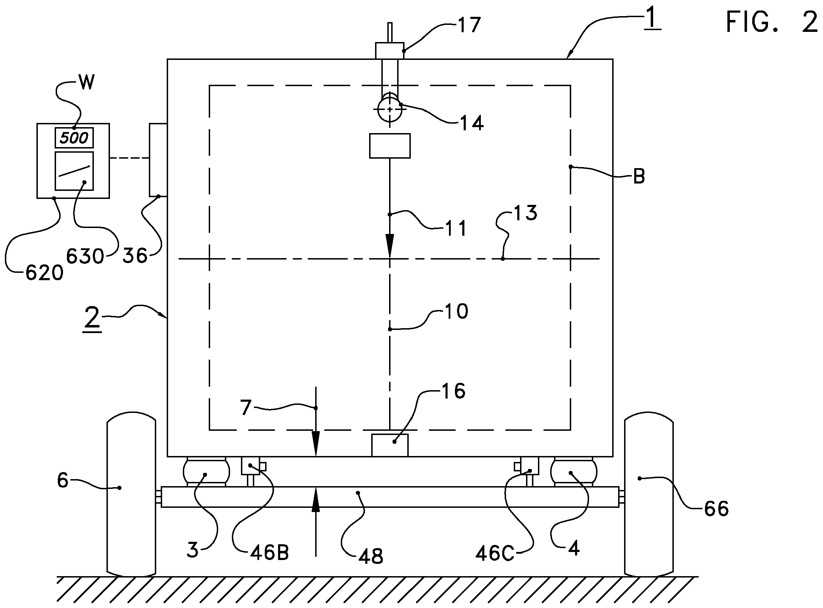

EP 2446731 A1 and US 8,326,563 B2 disclose a round baler 10 with a draft tongue 16 which can be coupled to a towing vehicle. An electronic control unit 36 determines the actual weight W_a of a bale B in the baler's pressing chamber. For doing so the control unit 36 uses the weight W_f of the full baler 10, i.e. the weight of the baler 10 carrying the bale B, the weight W_e of the empty baler, and the slope A of the ground on which the baler 10 is operated. For calculated the cosine of the slope A, an empty baler tare weight W_t of the baler on a horizontal ground is measured in advance. For measuring W_f and W_e several load cells 46 are provided on board of the baler 10, namely a load cell 46A on the baler's draft tongue 16 and two load cells 46B and 46C between the baler frame 12 and the axle 48, cf. Fig. 1 and Fig. 2.

US 5,913,801 discloses an agricultural baler with a pressure sensor 42. This pressure sensor 42 measures the supporting load which the baler applies on the hitch (towing unit) 26 of the baler. This pressure sensor 42 is located on the hitch 26 itself. Weight sensors are mounted on the ground drive 28 (wheels) of the baler and measure the weight of the baler on the axle, cf. col. 3/1.52-59.

EP 0625696 B1 and EP 0982571 B1 disclose embodiments of load sensors mounted at a tractor hitch.

EP 2022306 B1 discloses a control system for steering an implement 14 which is coupled with a tractor 12. Several sensors are mounted on board of the tractor 12 and several further sensors are mounted on board of the implement 14 which is pulled by the tractor 12. A sensor can detect a value indicative of an operating parameter of the tractor 12 or of the implement 14. In one embodiment the sensor detects a force which the implement 14 applies onto the tractor 12, in particular a drag force (Zugkraft), a traversal force (Querkraft), or a supporting load (Stützkraft). The implement sensors transmit signals to the tractor control unit 34 via a data connection. An inclination sensor 42 can measure the inclination of the implement 14. The sensor can also measure a supporting load on an axle (Achslast), cf. col. 4/l.36.

EP 2745666 A1 discloses a combination comprising a tractor 12 (called agricultural vehicle 12) pulling an implement 14. A towing unit of the implement 14 is coupled with a hitch assembly 16 of the tractor 12. A sensor 48 is mounted at the hitch assembly 16 of the tractor 12 and provides a signal indicative of the load which the implement towing unit applies onto the hitch assembly 16. Several further sensors are mounted on board of the implement 14. Fig. 2 shows a block diagram of the control system including the load sensor 48. Fig. 3 shows a flow chart 74 including the step 76 that the load on the tractor hitch is measured. A data transmission from different sensors to the control unit is disclosed.

In US 2009/0217827 A1 the baler 100 comprises an axle 210, a tank, a load cell 130 mounted at the tongue and several axle load cells 510 mounted at the axle 210. Signals from these three load cells 130, 510 are used to measure the weight of a bale 310, par. [0034]. A controller 620 receives signals from the load cells 130, 520. The controller 620 may be mounted on board of the tractor 610 or on board of the baler 100. A data connection 630 connects the tractor 610 with the baler 100, cf. [0035]. In the embodiment the controller 620 is mounted in the driver's cabin and is connected with the baler 100 via a cable 630, cf. Fig. 6.

EP 1053673 B1 discloses a baler with several sensors. A sensor 36 measures the weight of a bale 20. This sensor 36 is mounted near the axle for a baler's wheel 14, cf. Fig. 1 and col. 5/l.1 ff. A load sensor 38 measures the load onto the towing unit 16.

EP 1607248 A1 discloses a combination with a pulling vehicle and a trailer (Anhangefahrzeug). A sensor is positioned between a first coupling element and the pulling vehicle. The vertical load is displayed to the operator.

### SUMMARY OF THE INVENTION

A problem solved by the invention is to provide a combination with the features of the preamble of claim 1 and a weight force measuring method with the features of the preamble of claim 10 wherein the implement requires fewer parts without reducing the reliability of the measurement.

This problem is solved by a combination with the features of claim 1 and by a weight force measuring method with the features of claim 10. Preferred embodiments are specified in the depending claims.

The combination according to the invention comprises
- a propelled vehicle and
- an agricultural implement with at least one implement axle and at least one ground-engaging wheel.

The hitch of the propelled vehicle is at least temporarily mechanically connected with a towing unit of the implement. The propelled vehicle can move the connected implement. The implement can be moved over ground by means of the or at least one implement ground-engaging wheel which is rotatably mounted at the or one implement axle.

A scale is arranged for measuring a weight force which occurs on board of the agricultural implement. The scale comprises
- at least one axle weighing cell,
- a load weighing cell, and
- an evaluating unit.

The or every axle weighing cell is mounted on board of the implement and measures a value indicative of the vertical load onto the or one assigned implement axle. The load weighing cell is mounted on board of the propelled vehicle and measures a value indicative of the vertical load which is applied onto the hitch of the propelled vehicle. This hitch is at least temporarily connected with the implement's towing unit. Therefore the vertical load applied by the towing unit influences the measured vertical load applied onto the hitch.

The evaluating unit is mounted on board of the implement. The evaluating unit receives signals from the or at least one axle weighing cell and from the load weighing cell. The signals from the load weighing cell are indicative of the vertical load applied on the hitch and are transmitted from the propelled vehicle to the evaluating unit on board of the implement. The evaluating unit determines a value indicative of the weight force occurring on board of the implement. For doing so the evaluating unit evaluates received signals from the load weighing cell and from the or at least one axle weighing cell.

### ADVANTAGES

The combination comprises a propelled vehicle and an agricultural implement. The propelled vehicle can move the combination over ground. Therefore the implement does not need an own drive which moves the implement over ground. It is possible that the same propelled vehicle subsequently pulls or pushes different agricultural implements. As long as it is not necessary to move the implement, the propelled vehicle can be separated from the implement and can be used for performing a further task.

The scale according to the invention measures the weight force by means of at least two weighing cells, namely at least one axle weighing cell and the vertical load weighing cell mounted on board of the propelled vehicle. The or every axle weighing cell measures the vertical load onto the or one assigned implement axle. The vertical load weighing cell measures the vertical load onto the hitch of the propelled vehicle. This vertical load is applied onto the vehicle hitch by the implement towing unit while the towing unit is connected with the hitch. Therefore the weight force is determined by using signals from at least two sensors. This embodiment increases the reliability compared with using only one sensor. Thanks to the invention it is possible to measure the weight force while the combination is moved over ground, in particular when being operated on an agricultural field.

The invention enables to measure the weight of an object which is carried on board of the agricultural implement. The weight of the carried object can be determined by applying the invention. Determining the object weight is in particular often required or desired if the implement subsequently carries several objects or if the weight of the object increases or otherwise varies while the implement is operated. The weight force occurring on board of the implement depends on the weight of the carried object. The signals from these at least two weighing cells suffice to determine the weight of the object.

The weight force depends on the weight of the implement and on the object weight. The weight of the empty implement can be determined in advance and does not depend on the weight of the carried object. Therefore the weight of the carried object can be determined by using the weight force on board of the implement carrying the object and the weight force on board of the empty implement. Thanks to the invention it is possible to measure the weight of the object before the object is removed out of the implement. After removing the object it is often difficult to measure the object's weight, e.g. when the object is deposited on a field.

Typically the towing unit and the hitch are coupled with each other such that the implement can slightly rotate around an axis running through the or one implement axle, i.e. a horizontal axis perpendicular to the travelling direction. This rotation depends on the center of gravity of the implement. If the implement carries and/or forms an object, the center of gravity depends on the object's weight. A lever arm between the implement's towing unit and the vehicle's hitch on the one side and this implement rotating axis on the other side occurs. The signals measured by the vertical load cell depend on the length of this lever arm which is known in advance by the construction of the implement and on the current inclination of the combination around an axis perpendicular to the travelling direction of the combination when being moved over ground. The signals from the or every axle weight cell also depend on the inclination but in a different way. Therefore the evaluation of the two signals often enables to determine and compensate the influence of the inclination.

According to the invention the load weighing cell is mounted on board of the propelled vehicle. Nevertheless this sensor measures indirectly the vertical load with the implement's towing unit applies onto the vehicle's hitch. This vertical load depends on the weight force occurring on board of the implement, e.g. on the weight of the object carried by the implement (and on the weight of the empty implement). As the vertical load on the hitch is measured and as this vertical load is caused by the implement's towing unit and therefore indicative of the towing unit vertical load, the load onto the towing unit needs not to be measured directly. In particular no sensor mounted at the implement towing unit is required. Therefore the invention saves a vertical load sensor mounted on the towing unit of the implement or at a further place on board of the implement, i.e. saves at least one sensor on board of the implement. The invention further saves cables and further devices or establishing a data connection which otherwise would be necessary to connect this sensor with the evaluating unit on board of the implement.

A vertical load sensor for the hitch is often already implemented on board of the propelled vehicle, in particular for ensuring a proper propulsion speed of the combination and/or for avoiding or at least detecting an overload onto the hitch or onto a propulsion motor of the vehicle or for preventing that the propelled vehicle is tilted by the hitch load and cannot be steered. Thanks to the invention this sensor is additionally used for determining the weight force occurring on board of the implement, e.g. for measuring the weight of the carried object.

The towing unit of the implement is at least temporarily coupled with the hitch of the propelled vehicle. Therefore the position and distance of the vertical load weighing cell with respect to the implement axle or the respective position and distance with respect to every implement axle is determined by the implement's construction and does not vary during operation. For implementing the evaluation performed by the evaluating unit it is not necessary to know the dimensions and the geometry of the propelled vehicle.

Sometimes the same propelled vehicle subsequently pulls or pushes different agricultural implements. As the load weighing cell is mounted on board of the propelled vehicle, it needs only to be calibrated one time. The calibration suffices for the different implements.

According to the invention the evaluating unit is arranged on board of the implement and determines the weight force depending on signals from the at least one axle weighing cell and the load weighing cell. The only required data connection between propelled vehicle and implement is from the load weighing cell mounted on board of the propelled vehicle to the evaluating unit on board of the implement. The signals from the or every axle weighing cell need not to be transmitted to the propelled vehicle. A control unit on board of the implement can generate control inputs or alerts depending on the measured weight force without the need of obtaining control inputs from the propelled vehicle.

### PREFERED EMBODIMENTS

Preferably the implement comprises two ground-engaging wheels. The two wheels can be mounted on the same implement axle extending over the implement's width or on two shorter implement axles with a coinciding rotating axis. The scale comprises one axle weighing cell per wheel, i.e. at least two axle weighing cells. Every axle weighing cell measures that vertical load onto the or one respective implement axle which is applied in a position adjacent to the assigned wheel. The evaluating unit determines the value indicative of the weight force depending on signals from both axle weighing cells. It is also possible that the implement comprises two axles which are mounted one behind the other - seen in the travelling direction of the combination.

The or one weighing cell can be implemented as a force sensor. It is also possible that the or one weighing cell is implemented as a distance sensor which measures a value indicative of a distance reduction which is yielded by the weight force. The measured distance reduction is a value indicative of the vertical load applied onto the implement axle or onto the hitch, resp.

In one implementation the load weighing cell is mounted on the hitch of the propelled vehicle. Thereby the load weighing cell is close to that location in which the applied vertical load to be measured occurs. It is also possible that the load weighing cell is mounted in a greater distance to the hitch.

In one embodiment the evaluating unit compares the calculated weight force value with a given weight force threshold. If the actual weight force reaches or even exceeds the given threshold, a signal is generated, e.g. an alert for a human operator or a signal deactivating a part of the implement or of the propelled vehicle. This embodiment prevents the undesired event that the overall weight of the combination is larger than a given threshold.

It is possible that the combination is operated in a hilly environment. In a preferred embodiment an inclination sensor measures the inclination of the combination, i.e. the angle around which the combination is tilted. In one implementation two inclination values are measured:
- one tilting angle around the longitudinal axis of the combination, i.e. around an axis parallel to the travelling direction, and
- one tilting angle around an axis perpendicular to the longitudinal axis of the combination.

The inclination sensor can be mounted on board of the implement or on board of the propelled vehicle. Signals indicative of the measured inclination are transferred to the evaluating unit on board of the implement. The or every measured inclination value is used for compensating the values provided by the load weighing cell and the or every axle weighing cell. But thanks to the feature that the evaluating unit processes signals from at least two different weighing cells such an inclination sensor is not necessary. The occurring weight force can also be determined without using an inclination sensor.

Preferably the agricultural implement can carry or form an object, e.g. can store or press or otherwise process agricultural crop material. In one application the evaluating unit determines the weight of the object. For doing so the evaluating unit uses the determined weight force value while the implement carries the object, e.g. before the implement deposits the object on the ground.

For measuring the weight of the carried object, the weight force which occurs on board of the empty implement is measured while the implement carries the object. This weight can be determined by using the or at least one axle weighing cell and the load weighing cell on board of the propelled vehicle.

In one embodiment the weight of the empty implement is measured while the implement is on a ground without inclination or with a known inclination. For measuring the weight of the empty implement, the implement needs not to be connected with a propelled vehicle. The signals from the axle weighing cells are used. It is also possible to measure the weight of the empty implement according to the invention, i.e. by using signals from the load weighing cell on board of the propelled vehicle. This embodiment saves the need of providing the empty implement weight to the evaluating unit from an external source. It is also possible that the weight force occurring on the empty implement is given.

Afterwards the object is loaded onto or into the implement or is created on board of the implement from loose material which is conveyed or otherwise fed to the implement. The weight force occurring on board of the implement carrying the object is measured by evaluating signals from the or every axle weighing cell and from the load weighing cell. The difference between the weight force occurring when the implement carries the object and of the weight force occurring on board of the empty implement is indicative of the weight of the object. It is possible to compensate the influence of the inclination on the calculated difference.

According to the invention the load weighing cell is mounted on board of the propelled vehicle and the evaluating unit is mounted on board of the implement. A temporal or permanent data connection is established from the load weighing cell to the evaluating unit. This data connection can comprise a data cable and/or a wireless connection. It is possible to implement the data connection by using a standardized communication protocol, e.g. the ISObus standard (ISO 11783).

In one implementation the load weighing cell for the vertical load applied onto the hitch is in data connection with a control unit on board of the propelled vehicle. This data connection is purely implemented on board of the propelled vehicle and can be implemented as a permanent, e.g. wired, data connection. Typically the or every load weighing cell on board of the propelled vehicle is in permanent data connection with the vehicle control unit, e.g. by means of a data bus. The evaluating unit can be part of a control unit for the implement. Preferably different sensors and actuators of the implement are also in data connection with the implement control unit. The evaluating unit is in permanent or temporal data connection with this vehicle control unit wherein the data connection can be established according to the ISObus standard or by using a point-to-point connection. This implementation saves the need to establish a specific data connection between the evaluating unit and the load weighing cell. It suffices to establish at least temporarily a data connection between the vehicle control unit and the implement control unit. This data connection is often already implemented, e.g. for displaying messages about the implement's state to an operator in a driver's cabin of the propelled vehicle and for receiving and processing usual inputs for controlling the implement.

In one application of the invention a control unit mounted on board of the implement can generate control inputs for a controllable part of the implement which is influenced by the measured weight force, e.g. for controlling damping elements between frame and chassis, for lifting or lowering a pick-up unit, or for controlling a part which moves loose material into a chamber of the implement or a part which applies pressure onto loose material on board of the implement. The implement control unit generates the control inputs depending on the determined weight force value. In one application the control inputs are generated depending on the current weight of a carried object. In a further application the temporal change of the weight force, i.e. the object weight change, is derived and the control inputs are generated depending on the weight force change. This application is in particular used if the object is formed on board of the implement and the object weight increases. The invention can be used as follows: The actual weight of the crop material is repeatedly measured, e.g. with a given sampling rate. This actual weight is used for controlling the implement and/or the propelled vehicle, e.g. is compared with a threshold.

In one application the implement comprises a storing room for storing crop material. The weight of the crop material in the storing room contributes to the weight force to be measured. The weight force determined by the scale is used for measuring the weight of the crop material in the storing room. The implement can further comprise a pick-up unit and a conveying unit. The pick-up unit picks up crop material from the ground. The conveying unit conveys the picked-up crop material to the storing room. The amount and therefore the weight of the crop material in the storing room increases until the storing room are made empty again. A loader wagon is an example for such an implement.

The implement can also comprise a pressing chamber in which a round bale or a cuboid bale is formed under pressure, i.e. the implement comprises a round baler or a cuboid baler. The weight of the bale in the pressing chamber contributes to the weight force to be measured. The scale measures the weight of the bale in the pressing chamber. This weight increases as long as further loose material is injected into the chamber or channel.

The implement can also comprise a wrapper with a wrapping table and at least one reservoir for wrapping material, e.g. a supply reel with an impermeable plastic film. The bale rests on the wrapping table and is to be wrapped into the wrapping material. In one embodiment the wrapping table rotates the bale. In one embodiment the or every reservoir is guided around the bale on the wrapping table. The entire surface of the bale on the wrapping table is wrapped. The weight of the wrapper carrying the bale is measured according to the invention.

The propelled vehicle can be a tractor, a combine harvester, a propelled threshing machine, or a propelled field chopper, e.g. The implement can be a round or cuboid baler, a loader wagon, a wrapper, a non-propelled threshing machine, a trailer, or a drilling vehicle, e.g.

These and other aspects of the invention and of the preferred embodiment will be even more apparent from the detailed embodiment as described below and will be elucidated in detail there.

### BRIEF DESCRIPTION OF THE DRAWINGS

Fig. 1 shows an agricultural combination comprising a tractor, a round baler and a scale in a side view;
Fig. 2 shows the combination of Fig. 1 in a rear view.

### DETAILED DESCRIPTION OF EMBODIMENT

In the embodiment the invention is used on board of an agricultural combination comprising a propelled tractor 610 and a round baler 1. The propelled tractor 610 serves as the propelled vehicle and the round baler 1 as the agricultural implement. The tractor 610 pulls the baler 1 in the travelling direction TD (in Fig. 1 from left to right) over ground. Fig. 1 shows the following parts of the pulling tractor 610:
- a tractor hitch 18,
- a hood covering a motor,
- two ground-engaging wheels, and
- further usual tractor parts.

The baler 1 comprises the following parts, cf. Fig. 1:
- several pressing belts 28 surrounding a drum-shaped bale forming chamber,
- a tensioning arm 32 for the pressing belts 28,
- a pivoting axis 34 of the tensioning arm 32,
- several stationary deflecting rollers 30 for the pressing belts 28 wherein the rollers 30 are partly mounted at the front housing 20 and partly at the tailgate 24,
- three movable deflecting rollers for the pressing belts 28 mounted on the pivotal tensioning arm 32,
- a casing 2 for the bale forming chamber comprising a stationary front housing 20 and a pivotal tailgate 24,
- the pivoting axis 22 of the tailgate 24,
- a baler towing unit 19,
- a pick-up unit 42,
- a crop material inlet 40 guiding into the bale forming chamber surrounded by the pressing belts 28,
- a baler chassis 12,
- two optional damping elements 3, 4 between the casing 2 and the chassis 12,
- a left ground-engaging wheel 6 and a corresponding right ground-engaging wheel 66 (cf. Fig. 2) which are rotatably mounted on a common wheel axle 41,
- a chassis axle 48 around which the chassis 12 can slightly rotate with respect to the casing 2,
- the common rotating axis 41 of the wheels 6, 66,
- a wrapping apparatus 250 mounted at the pivotal tailgate 24,
- a baler control unit 36 which receives and processes sensor signals, generates control inputs for several controllable parts of the baler 1 and which additionally serves as the evaluating unit, and
- a user terminal 620 mounted in the driver's cabin of the tractor 610.

In one implementation the baler control unit 36 is connected with the user terminal 62 by means of a data cable. In a further implementation the baler control unit 36 is connected with a tractor control unit (not shown), e.g. via a data connection according to the ISObus standard (ISO 11783).

Fig. 2 shows the round baler 1 in a rear view carrying the round-cylindrical bale B with the center axis 13. Fig. 2 shows the baler 1 in a vertical plane 10 in the middle of the bale B and the weight 11.

The baler 1 forms under pressure a round-cylindrical bale B in the drum-shaped variable bale forming chamber which is surrounded by the pressing belts 28. For doing so the pick-up unit 42 picks up loose crop material arranged in a swath 38 from the ground and injects the picked-up crop material 38 through the crop material inlet 40 into the bale forming chamber. The pressing belts 28 compress the injected crop material. An increasing bale B is formed. This increasing bale B pivots the tensioning arm 32 around the pivoting axis 34. This bale B serves as the object formed and carried by the baler 1. The weight W of the bale B is to be measured. Later the bale B is ejected and deposited on the ground.

In one embodiment the measured bale weight W is to be given to the attention of a human operator steering the tractor 610. In a further embodiment the bale weight W together with a unique identifier for the bale B is stored on a data carrier. Preferably the geo-position of the location where the bale B is deposited on the ground is also measured and is stored on the data carrier. Further bale properties, e.g. the moisture, or the time of finishing the bale creation can also be stored on the data carrier. The data carrier can belong to remote stationary server. The data carrier can also be implemented as a chip which is fixed to the bale.

Fig. 2 shows the baler 1 of Fig. 1 in a direction parallel to the travelling direction TD from rearwards. The travelling direction TD is in the drawing plane of Fig. 1 and perpendicular to the drawing plane of Fig. 2. In the situation shown in Fig. 2 the baler 1 is on a horizontal ground (no inclination). The force of gravity is perpendicular to the ground surface. As can be seen in Fig. 2, the two axle weighing cells 46B, 46C measure the distance 7 between the casing 2 and the common rotating axle 48 in left and right lateral positions, resp. It is also possible that the axle weighing cells are implemented as force sensors. The summed weight 11 of the bale B and of those parts of the baler 1 which are positioned above the damping elements 3, 4 serves as the weight force occurring on board of the implement 1. This summarized weight force 11 reduces this distance 7. Therefore the reduction of the distance 7 is a value indicative of the summarized weight of the parts above the damping elements 3, 4 and therefore for the bale weight W.

In one application the average value between the two values provided by the two axle weighing cells 46B, 46C is formed. This average value is further used. It is further possible to calculate the difference between the two distance values. A large difference is a clue that the bale B has a shape which significantly differs from an ideal round cylinder.

In addition Fig. 2 shows the following parts which are optional and not essential for the invention:
- the two damping elements (rubber springs) 3, 4 for damping the movement of the casing 2 relative to the axle 48,
- a moisture sensor 16 positioned below the bale forming chamber which measures the moisture of the crop material in the bale forming chamber,
- a GPS receiver 17 for determining the current geo-position of the baler 1, and
- an inclination sensor 14 implemented as a pendulum.

In one implementation the inclination sensor 14 can measure the tilting angle of the baler 1 around a horizontal axis parallel to the travelling direction TD and a horizontal axis perpendicular to the travelling direction TD.

The weight W of the bale B in the bale forming chamber increases until the bale diameter reaches a given threshold. The increasing bale weight W is to be measured during operation. In one implementation the bale weight W is measured several times during operation, e.g. with a given sampling rate. In the embodiment the increasing bale weight is displayed on the user terminal 620, e.g. by showing a graph 630 and the current value W for the bale weight. The graph 630 shows the temporal increase of the bale weight W. In one application the bale weight W is displayed on the user terminal 620. In a further application an alert is generated if the bale weight exceeds a given weight threshold. For calculating the weight W of the bale, the weight of the implement 1 carrying the bale B is measured. The weight of the empty implement 1 is measured in advance or is given. The difference between the measured weight of the implement (round-baler 1) with the bale B and the empty implement 1 yields the desired weight W of the bale B. It is possible to compensate the influence of the measured inclination onto the calculated difference.

In one implementation the working spring constants of the damping elements 3, 4 can be changed during operation. The baler control unit 36 changes the spring constant depending on the determined bale weight W, e.g. such that the working spring constant is the higher the higher the measured bale weight W is.

In one implementation the baler control unit 36 determines the specific weight of the crop material pressed to the bale B by using the measured bale weight 11, the measured diameter of the round-cylindrical bale B, and the distance between the two front faces of the bale B which is determined by the distance between the two sidewalls of the casing 2, i.e. by the construction of the baler 1.

The scale for determining the bale weight 11 comprises the following parts:
- a left axle weighing cell 46B
- a right axle weighing cell 46C, and
- a load weighing cell 46A.

The axle weighing cells 46B, 46C are mounted on board of the baler 1. In the embodiment they are mounted between the bale forming chamber and the axle 48. In the embodiment the load weighing cell 46A is mounted at the tractor hitch 18. The load weighing cell 46A can also be implemented at an alternative place on board of the tractor 610.

The evaluating unit of the scale is implemented on the baler control unit 36. The evaluating unit receives signals from both axle weighing cells 46B, 46C and from the load weighing cell 46A. In one implementation the evaluating unit further receives signals from the inclination sensor 14. This inclination sensor 14 measures the inclination of the baler 1 around a horizontal axis being parallel to the travelling direction TD (perpendicular to the drawing plane of Fig. 2). Preferably the inclination sensor further measures the inclination around a horizontal axis perpendicular to the travelling direction TD (in the drawing plane of Fig. 2).

The current inclination can also be obtained by using the measured geo-position of the baler 1 and an electronic inclination map which yields for every geo-position of a given area the respective inclination value.

The evaluating unit 36 calculates a component of the weight force 11 and thereby of the bale weight W being perpendicular to the ground. For doing so the evaluating unit 36 uses the signals from the axle weighing cells 46B, 46C and the load weighing cell 46A which measures a load onto the tractor hitch 18 being perpendicular to the ground. The evaluating unit 36 uses the measured baler inclination for eliminating the influence of the inclination. The weight W of the bale B is calculated as the difference between the weight of the baler 1 carrying the bale B (more precisely: the weight force 11 occurring when the baler 1 carries the bale B) and the given weight of the empty baler 1.

In the embodiment the signals from the load weighing cell 64A mounted on the tractor hitch 18 are transmitted to the tractor control unit (not shown). The tractor control unit transmits the signals from the load weighing cell 46A to the baler control unit 36, e.g. via a cable or a wireless and e.g. according to the ISObus standard.

### LIST OF REFERENCE SIGNS

| | |
|---|---|
| 1 | round baler, serves as the agricultural implement |
| 2 | casing surrounding the bale forming chamber, comprises the stationary front housing 20 and the pivotal tailgate 24 |
| 3 | damping element (rubber spring) adjacent to the left wheel 6 |
| 4 | damping element (rubber spring) adjacent to the right wheel 66 |
| 6 | left ground-engaging wheel of the round baler 1, mounted at the axle 41 |
| 7 | distance between the casing 2 and the axle 48, measured by the weighing cells 46B and 46C |
| 10 | vertical middle plane of the round-cylindrical bale B |
| 11 | summed weight of the parts of the baler 1 above the damping elements 3,4 and the bale B in the pressing chamber, serves as the weight force occurring on board of the implement 1 which is measured according to the invention |
| 12 | chassis of the round baler 1 |
| 13 | center axis of the round-cylindrical bale B |
| 14 | inclination sensor implemented as a pendulum, mounted on board of the baler 1 |
| 16 | moisture sensor on board of the baler 1 |
| 17 | GPS receiver, measures the current geo-position of the baler 1 |
| 18 | hitch of the tractor 610, carries the load weighing cell 46A |
| 19 | towing unit of the baler 1, connected with the tractor hitch 18 |
| 20 | stationary front housing of the baler 1 |
| 22 | pivoting axis of the tailgate 24 |
| 24 | pivotal tailgate of the round baler 1 |
| 28 | pressing belts surrounding the bale forming chamber |
| 32 | pivotal tensioning arm for the pressing belts 28 |
| 34 | pivoting axis of the tensioning arm 32 |
| 36 | control unit mounted on board of the round baler 1, comprises the evaluating unit of the scale |
| 38 | swath of crop material on the ground |
| 40 | crop material inlet |
| 41 | common rotating axle for the left wheel 6 and for the corresponding right wheel 66, rotatably mounted at the chassis 12 |
| 42 | pick-up unit |
| 46A | load weighing cell at the tractor hitch 18 |
| 46B | left axle weighing cell for the left wheel 6 |
| 46C | right axle weighing cell for the right wheel 66 |
| 48 | chassis axle for the chassis 12 |
| 66 | right ground-engaging wheel of the round baler 1, mounted at the axle 41 |
| 250 | wrapping apparatus mounted at the tailgate 24 |
| 610 | tractor pulling the baler 1, serves as the propelled vehicle |
| 620 | user terminal mounted in the driver's cabin of the tractor 610 |
| 630 | graph displayed on the user terminal 620 and showing the temporal increase of the bale weight W |
| B | round bale in the pressing chamber |
| TD | traveling direction of the combination 610, 1 |
| W | current weight of the bale B on board of the baler 1, displayed on the user terminal 620 |

## Claims

1. Combination comprising
- a propelled vehicle (610) with a hitch (18),
- an agricultural implement (1), and
- a scale (46A, 46B, 46C, 36) arranged for measuring a weight force (11) occurring on board of the implement (1),
wherein the implement (1) comprises
- a towing unit (19) which is at least temporarily mechanically connected with the hitch (18),
- at least one implement axle (48), and
- at least one ground-engaging implement wheel (6, 66) rotatably mounted at the or at one implement axle (48),
wherein the scale (46A, 46B, 46C, 36) comprises
- at least one axle weighing cell (46B, 46C) mounted on board of the implement (1),
- a load weighing cell (46A), and
- an evaluating unit (36),
wherein the or every axle weighing cell (46B, 46C) is arranged to measure a value indicative of the vertical load applied onto the or one implement axle (48), and
wherein the evaluating unit (36) is arranged to determine a value indicative of the occurring weight force (11)
by evaluating signals from the load weighing cell (46A) and from the or at least one axle weighing cell (46B, 46C),
**characterized in that**
the load weighing cell (46A)
- is mounted on board of the propelled vehicle (610) and
- is arranged to measure a value indicative of the vertical load applied onto the hitch (18), and
the evaluating unit (36)
- is mounted on board of the agricultural implement (1) and
- is arranged to receive signals indicative of the measured vertical load from the load weighing cell (46A).

2. Combination according to claim 1,
**characterized in that**
an inclination sensor (14) is mounted on board of the implement (1) or of the propelled vehicle (610),
wherein the inclination sensor (14) is arranged to measure a value indicative of an inclination of the implement (1) or of the propelled vehicle (610) around at least one horizontal axis and
wherein the evaluating unit (36) is arranged to determine the weight force value (11) depending on signals from the inclination sensor (14) being indicative of the inclination.

3. Combination according to one of the preceding claims,
**characterized in that**
the propelled vehicle (610) comprises
- a vehicle control unit and
- at least one controlled vehicle part,
wherein the vehicle control unit is arranged to generate control inputs for the or at least one controlled vehicle part
depending on signals indicative of the weight force value (11) determined by the evaluating unit (36).

4. Combination according to one of the preceding claims,
**characterized in that**
the implement (1) comprises
- an implement control unit (36) and
- at least one controlled implement part (3, 4),
wherein the implement control unit (36) is arranged to generate control inputs for the or
for at least one controlled implement part (3, 4) depending on signals indicative of the weight force value (11) determined by the evaluating unit (36).

5. Combination according to one of the preceding claims,
**characterized in that**
the or at least one axle weighing cell (46B, 46C) is arranged to measure a value indicative of the vertical force applied onto the or one implement axle (48).

6. Combination according to one of the preceding claims,
**characterized in that**
the or at least one axle weighing cell (46B, 46C) is arranged to measure in a substantially vertical direction a distance between
- the implement axle (48) and
- a further part (2) of the implement (1) and
wherein the evaluating unit (36) is arranged to use the measured distance as the value indicative of the vertical load applied onto the implement axle (48).

7. Combination according to one of the preceding claims,
**characterized in that**
the load weighing cell (46A) is mounted at the hitch (18) of the pulling vehicle (610).

8. Combination according to one of the preceding claims,
**characterized in that**
the implement (1) is arranged to carry or to form an object (B),
wherein the evaluating unit (36) is arranged to determine the weight (W) of an object (B) while the object (B) is carried or formed by the implement (1)
depending on the signals from the weighing cells (46A, 46B, 46C).

9. Combination according to claim 8,
**characterized in that**
the implement (1)
- comprises an implement control unit (36) and
- is arranged to eject a carried or formed object (B),
wherein the implement control unit (36)
- is at least temporarily in data connection with a data carrier and
- is arranged to store the measured object weight (W) on the data carrier.

10. Method for measuring a weight force (11) occurring on board of an agricultural implement (1)
by using a scale (46A, 46B, 46C, 36) mounted on board of a combination comprising
- a pulling vehicle (610) with a hitch (18) and
- the agricultural implement (1),
wherein the agricultural implement (1) comprises
- a towing unit (19),
- at least one implement axle (48) and
- at least one ground-engaging implement wheel (6, 66) rotatably mounted at the or at one implement axle (48),
wherein the scale (46A, 46B, 46C, 36) comprises
- at least one axle weighing cell (46B, 46C) mounted on board of the implement (1),
- a load weighing cell (46A), and
- an evaluating unit (36),
wherein the towing unit (19) is at least temporarily mechanically connected with the hitch (18),
wherein the weighing method comprises the steps that
the or every axle weighing cell (46B, 46C) measures a value indicative of the vertical load applied onto the or one implement axle (48) and
the evaluating unit (36) determines a value indicative of the occurring weight force (11) by evaluating signals
- from the load weighing cell (46A) and
- from the or at least one axle weighing cells (46B, 46C),
**characterized in that**
the load weighing cell (46A) is mounted on board of the propelled vehicle (610) and
the evaluating unit (36) is mounted on board of the agricultural implement (1),
wherein the weighing method comprises the further steps that
the load weighing cell (46A) measures a value indicative of the vertical load applied onto the hitch (18) when the hitch (18) is connected with the towing unit (19) and
a signal indicative of the value measured by the load weighing cell (46A) is transmitted to the evaluating unit (36).

11. Weighing method according to claim 10,
**characterized in that**
the step that the or every axle weighing cell (46B, 46C) measures a value indicative of the vertical load comprises the step that
the axle weighing cell (46B, 46C) measures a value indicative of the vertical force applied onto the or one implement axle (48) and
the step that the evaluating unit (36) determines the weight force value (11) comprises the step that
the evaluating unit (36) uses the measured vertical force as the measured vertical load.

12. Weighing method according to claim 10,
**characterized in that**
the step that the or every axle weighing cell (46B, 46C) measures a value indicative of the vertical load comprises the step that
the axle weighing cell (46B, 46C) measures in a substantially vertical direction a distance between
- the implement axle (48) and
- a part (2) of the implement (1) and
the step that the evaluating unit (36) determines the weight force value (11) comprises the step that
the evaluating unit (36) uses the measured distance as the value indicative of the vertical load.

13. Weighing method according to one of the claims 10 to 12,
**characterized in that**
the implement (1) comprises
- a moveable part and
- a control unit (36),
wherein the control unit (36) generates control inputs for the or for at least one moveable part of the implement (1)
depending on the determined weight force value (11).

14. Method for weighing an object (B),
wherein the object (B) is loaded onto or formed on board of an agricultural implement (1),
wherein the implement (1) is connected with a pulling vehicle (610),
wherein a value indicative of a weight force occurring on board of the implement (1) is measured or given before the object (B) is loaded or formed and while the implement (1) is empty,
wherein the weight force value (11) is measured again after the object (B) is loaded or while or after the object (B) is formed,
wherein the step of measuring the weight force value (11) after or while the object (B) is loaded or formed is performed by applying a method according to one of the claims 10 to 13.

15. Weighing method according to claim 14,
**characterized in that**
the step of measuring the value before the object (B) is loaded or formed is also performed by applying a method according to one of the claims 10 to 13.

## Patentansprüche

1. Kombination mit
- einem angetriebenen Fahrzeug (610) mit einer Anbauvorrichtung oder Kupplung (18),
- einem landwirtschaftlichen Werkzeug oder Gerät (1) und
- einer Waage (46A, 46B, 46C, 36), die zum Messen einer Gewichtskraft (11) eingerichtet ist, die an dem Werkzeug oder Gerät (1) wirkt,
wobei das Werkzeug oder Gerät (1) aufweist
- eine Zugeinheit (19), die zumindest temporär mechanisch mit der Anbauvorrichtung oder Kupplung (18) verbunden ist,
- zumindest eine Achse (48) des Werkzeugs oder Geräts und
- zumindest ein in den Boden eingreifendes oder mit diesem in Wechselwirkung tretendes Rad (6, 66) des Werkzeugs oder des Geräts, welches verdrehbar an der oder einer Achse (48) des Werkzeugs oder Geräts montiert ist,
wobei die Waage (46A, 46B, 46C, 36) aufweist
- zumindest eine Achswägezelle (46B, 46C), die an dem Werkzeug oder Gerät (1) montiert ist,
- eine Lastwägezelle (46A), und
- eine Auswerteeinheit (36),
wobei die oder jede Achswägezelle (46B, 46C) zur Messung eines Werts eingerichtet ist, der die vertikale Last, die auf die oder eine Achse (48) des Geräts oder Werkzeugs aufgebracht wird, indiziert, und
wobei die Auswerteeinheit (36) zur Ermittlung eines Werts, der die auftretende Gewichtskraft (11) indiziert, eingerichtet ist
unter Auswertung von Signalen der Lastwägezelle (46A) und der oder zumindest einer Achswägezelle (46B, 46C),
**dadurch gekennzeichnet, dass**
die Lastwägezelle (46A)
- an dem angetriebenen Fahrzeug (610) montiert ist und
- zur Messung eines Werts eingerichtet ist, der die vertikale Last, die auf die Anbauvorrichtung oder Kupplung (18) aufgebracht wird, eingerichtet ist, und
die Auswerteeinheit (36)
- an dem landwirtschaftlichen Werkzeug oder Gerät (1) montiert ist und
- zum Empfang von Signalen, die die gemessene vertikale Last der Lastwägezelle (46A) indizieren, eingerichtet ist.

2. Kombination nach Anspruch 1,
**dadurch gekennzeichnet, dass**
ein Neigungssensor (14) an dem Werkzeug oder Gerät (1) montiert ist oder an dem angetriebenen Fahrzeug (610) montiert ist,
wobei der Neigungssensor (14) zur Messung eines Werts eingerichtet ist, der eine Neigung des Geräts oder Werkzeugs (1) oder des angetriebenen Fahrzeugs (610) um zumindest eine horizontale Achse eingerichtet ist, und
wobei die Auswerteeinheit (36) zur Ermittlung des Gewichtskraftwerts (11) in Abhängigkeit von Signalen von dem Neigungssensor (14), die die Neigung indizieren, eingerichtet ist.

3. Kombination nach einem der vorhergehenden Ansprüche,
**dadurch gekennzeichnet, dass**
das angetriebene Fahrzeug (610) aufweist
- eine Fahrzeugsteuereinheit oder Fahrzeugregeleinheit und
- zumindest ein gesteuertes oder geregeltes Fahrzeugteil,
wobei die Fahrzeugsteuereinheit oder Fahrzeugregeleinheit zur Erzeugung von steuernden oder regelnden Eingangssignalen für das oder zumindest ein gesteuertes oder geregeltes Fahrzeugteil eingerichtet ist
in Abhängigkeit von Signalen, die den Gewichtskraftwert (11), der von der Auswerteeinheit (36) ermittelt worden ist, indizieren.

4. Kombination nach einem der vorhergehenden Ansprüche,
**dadurch gekennzeichnet, dass**
das Werkzeug oder Gerät (1) aufweist
- eine Gerätesteuereinheit oder Geräteregeleinheit (36) und
- zumindest ein gesteuertes oder geregeltes Geräteteil (3, 4),
wobei die Gerätesteuereinheit oder Geräteregeleinheit (36) zur Erzeugung von steuernden oder regelnden Eingangssignalen für das oder zumindest ein gesteuertes oder geregeltes Geräteteil (3, 4) eingerichtet ist,
in Abhängigkeit von Signalen, die den Gewichtskraftwert (11), der von der Auswerteeinheit (36) ermittelt worden ist, indizieren.

5. Kombination nach einem der vorhergehenden Ansprüche,
**dadurch gekennzeichnet, dass**
die oder zumindest eine Achswägezelle (46B, 46C) zur Messung eines Werts, der die vertikale Kraft, die auf die oder eine Achse (48) des Werkzeugs oder Geräts aufgebracht wird, eingerichtet ist.

6. Kombination nach einem der vorhergehenden Ansprüche,
**dadurch gekennzeichnet, dass**
die oder zumindest eine Achswägezelle (46B, 46C) zur Messung eines Abstands zwischen
- der Achse (48) des Geräts oder Werkzeugs und
- einem weiteren Teil (2) des Geräts oder Werkzeugs (1)
in eine im Wesentlichen vertikale Richtung eingerichtet ist und
wobei die Auswerteeinheit (36) zur Verwendung des gemessenen Abstands als Wert, der die vertikale Last, die auf die Achse (48) des Geräts aufgebracht wird, indiziert, eingerichtet ist.

7. Kombination nach einem der vorhergehenden Ansprüche,
**dadurch gekennzeichnet, dass**
die Lastwägezelle (46A) an der Anbauvorrichtung oder Kupplung (18) des ziehenden Fahrzeugs (610) montiert ist.

8. Kombination nach einem der vorhergehenden Ansprüche,
**dadurch gekennzeichnet, dass**
das Gerät oder Werkzeug (1) zum Tragen oder zur Ausbildung eines Objekts (B) eingerichtet ist, wobei die Auswerteeinheit (36) zur Ermittlung des Gewichts (W) eines Objekts während des Tragens oder Ausbildens des Objekts (B) durch das Gerät oder Werkzeug (1) in Abhängigkeit von Signalen von den Wägezellen (46A, 46B, 46C) eingerichtet ist.

9. Kombination nach Anspruch 8,
**dadurch gekennzeichnet, dass**
das Gerät oder Werkzeug (1)
- eine Gerätesteuereinheit oder Geräteregeleinheit (36) aufweist und
- zum Auswerfen eines getragenen oder gebildeten Objektes (B) eingerichtet ist, wobei die Gerätesteuereinheit oder Geräteregeleinheit (36)
- zumindest temporär eine Datenverbindung mit einem Datenträger ausbildet und
- zum Speichern des gemessenen Objektgewichts (W) auf dem Datenträger eingerichtet ist.

10. Verfahren zum Messen einer Gewichtskraft (11), die auf einem landwirtschaftlichen Gerät oder Werkzeug (1) auftritt
unter Verwendung einer Waage (46A, 46B, 46C, 36), die auf der Kombination montiert ist, mit
- einem ziehenden Fahrzeug (610) mit einer Anbauvorrichtung oder Kupplung (11) und
- einem landwirtschaftlichen Gerät oder Werkzeug (1),
wobei das landwirtschaftliche Gerät oder Werkzeug (1) aufweist
- eine Zugeinheit (19),
- zumindest eine Achse (48) des Geräts oder Werkzeugs und
- zumindest ein mit dem Boden in Wechselwirkung tretendes oder in diesen eingreifenden Rad (6, 66) des Geräts oder Werkzeugs, welches verdrehbar mit der oder zumindest einer Achse (48) des Geräts oder Werkzeugs montiert ist,
wobei die Waage (46A, 46B, 46B, 36) aufweist
- zumindest eine Achswägezelle (46B, 46C), die an dem Gerät oder Werkzeug (1) montiert ist,
- mindestens eine Lastwägezelle (46A) und
- eine Auswerteeinheit (36),
wobei die Zugeinheit (19) zumindest temporär mechanisch mit der Anbauvorrichtung oder der Kupplung (18) verbunden ist,
wobei das Verfahren zum Wiegen die Verfahrensschritte aufweist, dass
die oder jede Achswägezelle (46B, 46C) einen Wert misst, der die vertikale Last, die auf das oder eine Achse (48) des Geräts oder Werkzeugs aufgebracht wird, indiziert und
die Auswerteeinheit (36) einen Wert, der die auftretende Gewichtskraft (11) indiziert, ermittelt durch Auswertung von Signalen
- von der Lastwägezelle (46A) und
- von den oder zumindest einer Achswägezelle(n) (46B, 46C),
**dadurch gekennzeichnet, dass**
die Lastwägezelle (46A) an dem angetriebenen Fahrzeug (610) montiert wird oder ist und die Auswerteeinheit (36) an dem landwirtschaftlichen Gerät oder Werkzeug (1) montiert ist oder wird, wobei das Verfahren zum Wiegen die weiteren Verfahrensschritte aufweist, dass die Lastwägezelle (46A) einen Wert misst, der die vertikale Last, die auf die Anbauvorrichtung oder Kupplung (18) appliziert wird, wenn die Anbauvorrichtung oder Kupplung (18) mit der Zugeinheit (19) verbunden ist, indiziert, und ein Signal, welches den Wert, der von der Lastwägezelle (46A) gemessen worden ist, indiziert, an die Auswerteeinheit (36) übertragen wird.

11. Verfahren zum Wiegen nach Anspruch 10,
**dadurch gekennzeichnet, dass**
der Verfahrensschritt, dass die oder jede Achswägezelle (46B, 46C) einen Wert misst, der die vertikale Last indiziert, den Verfahrensschritt aufweist, dass
die Achswägezelle (46B, 46C) einen Wert misst, der die vertikale Kraft, die auf die oder eine Achse (48) des Geräts oder Werkzeugs aufgebracht wird, indiziert, und
der Verfahrensschritt, dass die Auswerteeinheit (36) den Gewichtskraftwert (11) ermittelt, den Verfahrensschritt aufweist, dass
die Auswerteeinheit (36) die gemessene Vertikalkraft verwendet als gemessene vertikale Last.

12. Verfahren zum Wiegen nach Anspruch 10,
**dadurch gekennzeichnet, dass**
der Verfahrensschritt, dass die oder jede Achswägezelle (46B, 46C) einen Wert misst, der die vertikale Last indiziert, den Verfahrensschritt aufweist, dass
die Achswägezelle (46B, 46C) einen Abstand zwischen
- der Achse (48) des Geräts oder Werkzeugs und
- einem Teil (2) des Geräts oder Werkzeugs (1)
in eine im Wesentlichen vertikale Richtung misst und
der Verfahrensschritt, dass die Auswerteeinheit (36) den Gewichtskraftwert (11) ermittelt, den Verfahrensschritt aufweist, dass
die Auswerteeinheit (36) den gemessenen Abstand als Wert, der die vertikale Last indiziert, verwendet.

13. Verfahren zum Wiegen nach einem der Ansprüche 10 bis 12,
**dadurch gekennzeichnet, dass**
das Gerät oder Werkzeug (1) aufweist
- ein bewegliches Teil und
- eine Steuereinheit oder Regeleinheit (36),
wobei die Steuereinheit oder Regeleinheit (36) steuernde oder regelnde Eingangssignale für das oder für zumindest ein bewegbares Teil des Geräts oder Werkzeugs (1) erzeugt in Abhängigkeit von dem ermittelten Gewichtskraftwert (11).

14. Verfahren zum Wiegen eines Objekts (B),
wobei das Objekt (B) auf das landwirtschaftliche Gerät oder Werkzeug (1) geladen wird oder von diesem gebildet wird,
wobei das Gerät oder Werkzeug (1) mit einem ziehenden Fahrzeug (610) verbunden ist,
wobei ein Wert, der eine Gewichtskraft, die auf dem Werkzeug oder Gerät (1) auftritt, indiziert, gemessen wird oder bereitgestellt wird, bevor das Objekt (B) geladen oder gebildet wird und während das Gerät oder Werkzeug (1) leer ist,
wobei der Gewichtskraftwert (11) erneut gemessen wird, nachdem das Objekt (B) geladen ist oder während oder nachdem das Objekt (B) gebildet wird oder ist,
wobei der Schritt des Messens des Gewichtskraftwerts (11) nachdem oder während das Objekt (B) geladen oder gebildet ist oder wird, ausgeführt wird durch Anwendung eines Verfahrens nach einem der Ansprüche 10 bis 13.

15. Verfahren zum Wiegen nach Anspruch 14,
**dadurch gekennzeichnet, dass**
der Verfahrensschritt des Messens des Werts, bevor das Objekt (B) geladen wird oder ist oder gebildet wird oder ist, auch aufgeführt wird durch Anwendung eines Verfahrens nach einem der Ansprüche 10 bis 13.

## Revendications

1. Combinaison comprenant
- un véhicule propulsé (610) avec un attelage (18),
- une machine agricole (1), et
- une balance (46A, 46B, 46C, 36) agencée pour mesurer une force de poids (11) se produisant à bord de la machine (1),
dans laquelle la machine (1) comprend
- une unité de remorquage (19) qui est au moins temporairement mécaniquement raccordée à l'attelage (18),
- au moins un essieu de machine (48), et
- au moins une roue de machine en prise avec le sol (6, 66) montée en rotation au niveau de l'essieu de machine ou d'un essieu de machine (48),
dans laquelle la balance (46A, 46B, 46C, 36) comprend
- au moins une cellule de pesée d'essieu (46B, 46C) montée à bord de la machine (1),
- une cellule de pesée de charge (46A), et
- une unité d'évaluation (36),
dans laquelle la cellule de pesée d'essieu ou chaque cellule de pesée d'essieu (46B, 46C) est agencée pour mesurer une valeur indicative de la charge verticale appliquée sur l'essieu de machine ou un essieu de machine (48), et
dans laquelle l'unité d'évaluation (36) est agencée pour déterminer une valeur indicative de la force de poids (11) se produisant
en évaluant des signaux provenant de la cellule de pesée de charge (46A) et de la cellule de pesée d'essieu ou d'au moins une cellule de pesée d'essieu (46B, 46C),
**caractérisée en ce que**
la cellule de pesée de charge (46A)
- est montée à bord du véhicule propulsé (610) et
- est agencée pour mesurer une valeur indicative de la charge verticale appliquée sur l'attelage (18), et
l'unité d'évaluation (36)
- est montée à bord de la machine agricole (1) et
- est agencée pour recevoir des signaux indicatifs de la charge verticale mesurée à partir de la cellule de pesée de charge (46A).

2. Combinaison selon la revendication 1,
**caractérisée en ce que**
un capteur d'inclinaison (14) est monté à bord de la machine (1) ou du véhicule propulsé (610),
dans laquelle le capteur d'inclinaison (14) est agencé pour mesurer une valeur indicative d'une inclinaison de la machine (1) ou du véhicule propulsé (610) autour d'au moins un axe horizontal et
dans laquelle l'unité d'évaluation (36) est agencée pour déterminer la valeur de force de poids (11) dépendant de signaux provenant du capteur d'inclinaison (14) qui est indicative de l'inclinaison.

3. Combinaison selon l'une des revendications précédentes,
**caractérisée en ce que**
le véhicule propulsé (610) comprend
- une unité de commande de véhicule et
- au moins une partie de véhicule commandée,
dans laquelle l'unité de commande de véhicule est agencée pour générer des entrées de commande pour la partie de véhicule commandée ou au moins une partie de véhicule commandée
en fonction de signaux indicatifs de la valeur de force de poids (11) déterminée par l'unité d'évaluation (36).

4. Combinaison selon l'une des revendications précédentes,
**caractérisée en ce que**
la machine (1) comprend
- une unité de commande de machine (36) et
- au moins une partie de machine commandée (3, 4),
dans laquelle l'unité de commande de machine (36) est agencée pour générer des entrées de commande pour la partie de machine commandée ou pour au moins une partie de machine commandée (3, 4)
en fonction de signaux indicatifs de la valeur de force de poids (11) déterminée par l'unité d'évaluation (36).

5. Combinaison selon l'une des revendications précédentes,
**caractérisée en ce que**
la cellule de pesée d'essieu ou au moins une cellule de pesée d'essieu (46B, 46C) est agencée pour mesurer une valeur indicative de la force verticale appliquée sur l'essieu de machine ou au moins un essieu de machine (48).

6. Combinaison selon l'une des revendications précédentes,
**caractérisée en ce que**
la cellule de pesée d'essieu ou au moins une cellule de pesée d'essieu (46B, 46C) est agencée pour mesurer dans une direction sensiblement verticale une distance entre
- l'essieu de machine (48) et
- une partie supplémentaire (2) de la machine (1) et
dans laquelle l'unité d'évaluation (36) est agencée pour utiliser la distance mesurée en tant que valeur indicative de la charge verticale appliquée sur l'essieu de machine (48).

7. Combinaison selon l'une des revendications précédentes,
**caractérisée en ce que**
la cellule de pesée de charge (46A) est montée au niveau de l'attelage (18) du véhicule tracteur (610).

8. Combinaison selon l'une des revendications précédentes,
**caractérisée en ce que**
la machine (1) est agencée pour porter ou pour former un objet (B),
dans laquelle l'unité d'évaluation (36) est agencée pour déterminer le poids (W) d'un objet (B) pendant que l'objet (B) est porté ou formé par la machine (1)
en fonction des signaux provenant des cellules de pesée (46A, 46B, 46C).

9. Combinaison selon la revendication 8, **caractérisée en ce que**
la machine (1)
- comprend une unité de commande de machine (36) et
- est agencée pour éjecter un objet (B) porté ou formé,
dans laquelle l'unité de commande de machine (36)
- est au moins temporairement en connexion de données avec un support de données et
- est agencée pour stocker le poids d'objet mesuré (W) sur le support de données.

10. Procédé de mesure d'une force de poids (11) se produisant à bord d'une machine agricole (1)
par l'utilisation d'une balance (46A, 46B, 46C, 36) montée à bord d'une combinaison comprenant
- un véhicule tracteur (610) avec un attelage (18) et
- la machine agricole (1),
dans lequel la machine agricole (1) comprend
- une unité de remorquage (19),
- au moins un essieu de machine (48) et
- au moins une roue de machine en prise avec le sol (6, 66) montée en rotation au niveau de l'essieu de machine ou d'un essieu de machine (48),
dans lequel la balance (46A, 46B, 46C, 36) comprend
- au moins une cellule de pesée d'essieu (46B, 46C) montée à bord de la machine (1),
- une cellule de pesée de charge (46A), et
- une unité d'évaluation (36),
dans lequel l'unité de remorquage (19) est au moins temporairement mécaniquement raccordée à l'attelage (18) ;
dans lequel le procédé de pesée comprend les étapes selon lesquelles
la cellule de pesée d'essieu ou chaque cellule de pesée d'essieu (46B, 46C) mesure une valeur indicative de la charge verticale appliquée sur l'essieu de machine ou un essieu de machine (48), et
l'unité d'évaluation (36) détermine une valeur indicative de la force de poids (11) se produisant en évaluant des signaux
- provenant de la cellule de pesée de charge (46A) et
- provenant de la cellule de pesée d'essieu ou d'au moins une cellule de pesée d'essieu (46B, 46C), **caractérisé en ce que**
la cellule de pesée de charge (46A) est montée à bord du véhicule propulsé (610) et l'unité d'évaluation (36) est montée à bord de la machine agricole (1),
dans lequel le procédé de pesée comprend les étapes supplémentaires selon lesquelles
la cellule de pesée de charge (46A) mesure une valeur indicative de la charge verticale appliquée sur l'attelage (18) lorsque l'attelage (18) est raccordé à l'unité de remorquage (19) et
un signal indicatif de la valeur mesurée par la cellule de pesée de charge (46A) est transmis à l'unité d'évaluation (36).

11. Procédé de pesée selon la revendication 10,
**caractérisé en ce que**
l'étape selon laquelle la cellule de pesée d'essieu ou chaque cellule de pesée d'essieu (46B, 46C) mesure une valeur indicative de la charge verticale comprend l'étape selon laquelle
la cellule de pesée d'essieu (46B, 46C) mesure une valeur indicative de la force verticale appliquée sur l'essieu de machine ou un essieu de machine (48) et
l'étape selon laquelle l'unité d'évaluation (36) détermine la valeur de force de poids (11) comprend l'étape selon laquelle
l'unité d'évaluation (36) utilise la force verticale mesurée en tant que charge verticale mesurée.

12. Procédé de pesée selon la revendication 10,
**caractérisé en ce que**
l'étape selon laquelle la cellule de pesée d'essieu ou chaque cellule de pesée d'essieu (46B, 46C) mesure une valeur indicative de la charge verticale comprend l'étape selon laquelle
la cellule de pesée d'essieu (46B, 46C) mesure dans une direction sensiblement verticale une distance entre
- l'essieu de machine (48) et
- une partie (2) de la machine (1) et
l'étape selon laquelle l'unité d'évaluation (36) détermine la valeur de force de poids (11) comprend l'étape selon laquelle
l'unité d'évaluation (36) utilise la distance mesurée en tant que valeur indicative de la charge verticale.

13. Procédé de pesée selon l'une des revendications 10 à 12,
**caractérisé en ce que**
la machine (1) comprend
- une partie déplaçable et
- une unité de commande (36),
dans lequel l'unité de commande (36) génère des entrées de commande pour la partie déplaçable de la machine ou pour au moins une partie déplaçable de la machine (1)
en fonction de la valeur de force de poids (11) déterminée.

14. Procédé de pesée d'un objet (B),
dans lequel l'objet (B) est chargé sur ou formé à bord d'une machine agricole (1),
dans lequel la machine (1) est raccordée à un véhicule tracteur (610),
dans lequel une valeur indicative d'une force de poids se produisant à bord de la machine (1) est mesurée ou donnée avant que l'objet (B) soit chargé ou formé et pendant que la machine (1) est vide,
dans lequel la valeur de force de poids (11) est mesurée à nouveau après que l'objet (B) est chargé ou pendant ou après que l'objet (B) est formé,
dans lequel l'étape de mesure de la valeur de force de poids (11) après ou pendant que l'objet (B) est chargé ou formé est réalisée en appliquant un procédé selon l'une des revendications 10 à 13.

15. Procédé de pesée selon la revendication 14,
**caractérisé en ce que**
l'étape de mesure de la valeur avant que l'objet (B) soit chargé ou formé est également réalisée en appliquant un procédé selon l'une des revendications 10 à 13.
